# EUROPÄISCHE PATENTSCHRIFT

(11) **EP 1 890 016 B1**
(45) Veröffentlichungstag und Bekanntmachung des Hinweises auf die Patenterteilung: **19.10.2011**
(21) Anmeldenummer: 07016176.5
(22) Anmeldetag: 17.08.2007
(51) Int. Cl.: F01N 3/20

(54) **Verfahren zur Zugabe mindestens eines Reaktanden zu einem Abgasstrom und Vorrichtung zur Aufbereitung eines Abgasstroms einer Verbrennungskraftmaschine**
Method for feeding at least one reactant into an exhaust gas flow and device for treating the exhaust gas flow in a combustion engine
Procédé destiné à l'ajout d'au moins un additif à un flux de gaz d'échappement et dispositif destiné à la préparation d'un flux de gaz d'échappement d'un moteur à combustion interne

(30) Priorität: 18.08.2006 DE 102006038904
(43) Veröffentlichungstag der Anmeldung: 20.02.2008
(73) Patentinhaber: Emitec Gesellschaft für Emissionstechnologie mbH, 53797 Lohmar (DE)
(72) Erfinder: Witte-Merl, Olaf, 53919 Weilerswist (DE)
(74) Vertreter: Heine, Christian Klaus

(56) Entgegenhaltungen:
- WO-A-2006/057305
- DE-A1- 10 242 412
- JP-A- 2002 221 024
- JP-A- 2005 214 172

## Beschreibung

Gegenstand der vorliegenden Erfindung ist ein Verfahren zur Zugabe eines Reaktanden zu einem Abgasstrom einer Verbrennungskraftmaschine, sowie eine Vorrichtung zur Aufbereitung eines Abgasstroms einer Verbrennungskraftmaschine. Insbesondere lässt sich das erfindungsgemäße Verfahren und die erfindungsgemäße Vorrichtung bei der selektiven katalytischen Reduktion von Stickoxiden im Abgas von Verbrennungskraftmaschinen einsetzen.

Das Abgas von Verbrennungskraftmaschinen weist Stoffe auf, deren Emission in die Umwelt unerwünscht ist. In vielen Ländern werden Grenzwerte für die Emission solcher Stoffe beispielsweise im Abgas von Automobilen und grundsätzlich von Verbrennungskraftmaschinen festgelegt, die einzuhalten sind. Zu diesen Stoffen zählen auch Stickoxide (NOₓ). Die Emission von Stickoxiden wird einerseits über innermotorische Maßnahmen gesenkt, andererseits werden vermehrt zusätzliche Abgasnachbehandlungsmaßnahmen eingesetzt. Zu diesen Abgasnachbehandlungsmaßnahmen zählt auch die selektive katalytische Reduktion (selective catalytic reduction), bei der ein selektiv auf die Stickoxide wirkendes Reduktionsmittel dem Abgas zugegeben wird, worauf es unter Vorhandensein eines entsprechenden Katalysators zur Umsetzung der Stickoxide kommt. Das gebräuchlichste Reduktionsmittel für Stickoxide stellt Harnstoff dar, welches oftmals in Form einer Harnstoffwasserlösung, gegebenenfalls mit weiteren Stoffe, dem Abgas zugegeben wird. Harnstoff kann sich in Ammoniak zersetzen, beispielsweise durch eine Hydrolyse unter Reaktion mit Wasser und/oder durch eine Thermolyse.

Grundsätzlich ist es vorteilhaft, eine möglichst vollständige Verdampfung der Harnstoffwasserlösung bei Einbringen in das Abgassystem zu erreichen, da eine nicht vollständige Verdampfung dazu führt, dass durch das Abgassystem fliegende Tröpfchen der Harnstoffwasserlösung zu einer Abkühlung von im Abgassystem ausgebildeten Elementen wie beispielsweise Katalysatorträgerkörpern und/oder Partikelfiltern führen, die langfristig zu einer Schädigung dieser Elemente führen können. Weiterhin kann es zu unerwünschten Reaktionen oder Ablagerungen im Abgassystem kommen.

Aus der DE 10242412 A1 ist es bekannt, ein Reaktionsmittel in verschlossene Kanäle einer Abgasnachbehandlungseinheit zuzugeben, um die Verweilzeit des Reaktionsmittels in der Abgasnachbehandlungseinheit zu erhöhen. Dies erfordert jedoch eine aufwendige Konstruktion der Zugabeeinheit.

Aus der WO 2004/063540 A1 ist es bekannt, Harnstoff in einem Umlenkbereich einer Abgasnachbehandlungseinheit einzubringen. Jedoch ist auch dieses Zugabeverfahren noch nachteilig, da eine zu geringe Verdampfung des Harnstoffs bzw. der Harnstoffwasserlösung erreicht wird.

Von daher liegt hiervon ausgehend der Erfindung die Aufgabe zugrunde, ein Verfahren und eine Vorrichtung bereitzustellen, mit dem eine verbesserte Verdampfungsrate der Harnstoffwasserlösung bei Zugabe zum Abgasstrom erreicht werden kann.

Diese Aufgaben werden gelöst durch ein Verfahren und eine Vorrichtung mit den Merkmalen der jeweiligen unabhängigen Ansprüche. Die jeweiligen abhängigen Ansprüche sind auf vorteilhafte Weiterbildungen gerichtet.

Das erfindungsgemäße Verfahren zur Zugabe mindestens eines Reaktanden zu einem Abgasstrom einer Verbrennungskraftmaschine beruht darauf, dass stromabwärts eines Elementes zur Durchführung mindestens einer der folgenden Operationen: a) einer zumindest teilweisen Umsetzung und b) einer zumindest teilweisen Abscheidung zumindest einer Komponente des Abgasstroms eine Reaktandenströmung in Form einer Tröpfchenströmung so im Gegenstrom zum Abgasstrom zugegeben wird, dass mindestens 80 Gew.-% der Reaktandenströmung auf das Element trifft.

Unter einem Element zur Durchführung mindestens einer der folgenden Operationen: a) einer zumindest teilweisen Umsetzung und b) einer zumindest teilweisen Abscheidung zumindest einer Komponente des Abgasstroms wird insbesondere ein Katalysatorträgerkörper verstanden, welcher eine katalytisch aktive Beschichtung insbesondere in einem Washcoat umfasst, welche eine Umsetzung zumindest einer Komponente des Abgases katalysiert. Alternativ oder zusätzlich kann das Element auch die Funktion eines Partikelfilters oder einer Partikelfalle aufweisen, um die Konzentration von Partikeln im Abgas, insbesondere von Ruß, zu verringern. Hierbei kann es sich sowohl um einen geschlossenen Partikelfilter handeln, welcher eine Vielzahl von Kanälen umfasst, die wechselweise verschlossen sind, als auch um einen sogenannten Nebenstromfilter, bei dem mittels entsprechender Einbauten ein Teil des Abgases in ein poröses Medium geführt wird. Sowohl Katalysatorträgerkörper als auch Partikelfilter können besonders in vorteilhafter Weise in Form eines Wabenkörpers ausgebildet sein, bei dem ein keramischer und/oder metallischer Körper mit einer Vielzahl von durchströmbaren Hohlräumen ausgebildet ist. Insbesondere kann der Wabenkörper aus mindestens einer zumindest teilweise strukturierten metallischen Lage und gegebenenfalls mindestens einer im Wesentlichen glatten Lage zu einem Körper gewickelt werden oder einer oder mehrerer Stapel solcher Blechlagen gleich- oder gegensinnig verwunden werden. Auch Katalysatorträgerkörper und/oder Partikelfilter aus keramischen oder metallischem Schaum, aus Drahtgestrick oder Ähnlichem sind in vorteilhafter Weise möglich und erfindungsgemäß. Alternativ oder zusätzlich kann das Elemente auch lediglich in einer Beschichtung auf einer Oberfläche bestehen oder eine solche umfassen, beispielsweise auf einer Innenwandung eines Rohres beispielsweise des Mantelrohres oder der Abgasleitung. Unter Abscheidung wird hier neben einer Reduktion der Partikelkonzentration auch eine Abscheidung von Flüssigkeiten wie insbesondere von Wasser auf und/oder in dem Element verstanden, welches hierfür insbesondere zumindest teilweise porös ausgebildet ist.

Die Reaktandenströmung stellt einen Strom von Tropfen einer Reaktandenlösung dar, die in das Abgassystem eingebracht wird. Durch die Zugabe der Reaktandenströmung im Gegenstrom, die aufgrund der Zugabe stromabwärts des Elements, führt zu einer umgehenden Verwirbelung der Reaktandenströmung und somit zu einer gleichmäßigen Verteilung des Reaktanden im Abgas und gegebenenfalls bereits zu einer teilweisen Verdampfung der Reaktandenströmung durch die Wärme des Abgases. Dadurch, dass die Reaktandenströmung so zugegeben wird, dass zumindest ein Teil der Reaktandenströmung auf das Element trifft, kommt es im Betrieb, bei dem aufgrund der üblicherweise exothermen Reaktionen, die am Element stattfinden, und grundsätzlich auch durch die Aufheizung durch das heiße Abgas, zu einem Verdampfen der Reaktandenströmung auf dem Element. Zusätzlich weist das Element oftmals eine katalytisch aktive Beschichtung auf, die üblicherweise porös ist. Somit kann ein nicht sofort verdampfter Teil der Reaktandenströmung von der Beschichtung des Elementes aufgenommen und zwischengespeichert werden. Aufgrund der Temperatur des Elementes kommt es hier kurzfristig zu einer Verdampfung und Abgabe der eingelagerten Reaktandenlösung.

Bevorzugt ist hierbei eine Ausgestaltung, bei der sogar mindestens 85 Gew.-% (Gewichts-%) der Reaktandenströmung auf das Element treffen. Dies ist insbesondere vorteilhaft, wenn das Element zumindest in dem Bereich, in dem die Reaktandenströmung auftrifft, porös ist oder eine poröse Beschichtung aufweist.

Gemäß einer weiteren vorteilhaften Ausgestaltung des erfindungsgemäßen Verfahrens umfasst die Reaktandenströmung Tropfen eines mittleren Durchmessers von mindestens 30 Mikrometern.

Bevorzugt ist eine Verfahrensführung, bei der der mittlere Durchmesser der Tropfen mindestens 40 Mikrometer oder sogar mindestens 50 Mikrometer umfasst. Diese Tropfengrößenverteilung bewirkt, dass ein großer Anteil der Reaktandenströmung auf das Element auftrifft, ohne dass hohe Strömungsgeschwindigkeiten der Reaktandenströmung nötig sind.

Gemäß einer weiteren vorteilhaften Ausgestaltung des erfindungsgemäßen Verfahrens erfolgt zumindest in dem Bereich, in dem die Reaktandenströmung auf das Element trifft, eine Zersetzungsreaktion mindestens einer Komponente der Reaktandenströmung.

Hierbei kann es sich beispielsweise um eine Hydrolyse- und/oder Thermolyse eines Reduktionsmittelvorläufers wie Harnstoff handeln oder auch um eine Oxidationsreaktion, falls die Reaktandenströmung Kohlenwasserstoffe umfassen. Das Element weist beispielsweise zumindest in diesem Bereich eine entsprechend katalytisch aktive Beschichtung, beispielsweise eine Hydrolysekatalysatorbeschichtung oder eine Oxidationskatalysatorbeschichtung auf.

Gemäß einer vorteilhaften Ausgestaltung des erfindungsgemäßen Verfahrens umfasst die Reaktandenströmung mindestens einen der folgenden Stoffe:
a) ein Reduktionsmittel und
b) einen Reduktionsmittelvorläufer.

Insbesondere handelt es sich hierbei um ein Reduktionsmittel zur selektiven katalytischen Reduktion von Stickoxiden. Unter einem Reduktionsmittelvorläufer wird ein Stoff verstanden, welcher ein Reduktionsmittel abspalten kann und/oder welcher zu einem Reduktionsmittel reagieren kann.

Gemäß einer weiteren vorteilhaften Ausgestaltung des erfindungsgemäßen Verfahrens umfasst die Reaktandenströmung mindestens einen der folgenden Stoffe oder ein Derivat davon:
a) Harnstoff ((NH₂)₂CO),
b) Ammoniumformiat (HCOONH₄),
c) Ammoniumcarbamat (H₂NCOONH₄),
d) Ammoniumcarbonat ((NH₄)₂CO₃);
e) Ammoniumbicarbonat (NH₄HCO₃);
f) Ammoniumoxalat ((NH₄)₂(C₂O₄));
g) Ammoniumhydroxyd (NH₄OH)
h) Cyansäure (HOCN);
i) Cyanursäure (C₃H₃N₃O₃);
j) Isocyansäure (HNCO); und
k) Ammoniak (NH₃).

Mindestens eine der oben genannten Stoffe kann in besonders vorteilhafter Weise in Form einer wässrigen Lösung als sogenannte Reaktandenlösung in Form eines kleinen Tröpfchenstroms in den Abgasstrom eingebracht werden. Insbesondere umfasst dabei die wässrige Lösung sowohl Harnstoff als auch Ammoniumformiat und gegebenenfalls weitere Stoffe. Eine entsprechende Lösung wird unter dem Markennamen "Denoxium" vertrieben. Weiterhin kann es sich um eine Harnstoffwasserlösung handeln, die unter dem Markennamen "AdBlue" vertrieben wird.

Gemäß einer weiteren vorteilhaften Ausgestaltung des erfindungsgemäßen Verfahrens ist mindestens eine der folgenden Größen:
a) eine mittlere Geschwindigkeit der Reaktandenströmung;
b) ein mittlerer Massenstrom der Reaktandenströmung und
c) die Zusammensetzung der Reaktandenströmung in Abhängigkeit von mindestens einer der folgenden Größen einstellbar:
   A) Der Zusammensetzung des Abgasstroms;
   B) einer mittleren Geschwindigkeit des Abgasstroms; und
   C) von Betriebskenngrößen der Verbrennungskraftmaschine.

Bei der mittleren Geschwindigkeit der Reaktandenströmung handelt es sich insbesondere um eine Geschwindigkeit, die über einen definierten Bereich der Reaktandenströmung räumlich gemittelt ist. Selbiges gilt für den mittleren Massenstrom der Reaktandenströmung. Insbesondere wird unter der Zusammensetzung der Reaktandenströmung die Konzentration eines oder mehrerer Stoffe, insbesondere eines oder mehrerer der oben angegebenen Stoffe verstanden. Unter der Zusammensetzung des Abgasstromes wird insbesondere die Konzentration eines oder mehrerer Stoffe wie insbesondere die Stickoxidkonzentration verstanden oder auch die Konzentration einzelner Stickoxide (NO, NO₂). Bei der mittleren Geschwindigkeit des Abgasstroms handelt es sich insbesondere um eine über eine Bereich des Abgasstroms räumlich gemittelte Geschwindigkeit des Abgasstroms. Unter den Betriebskenngrößen der Verbrennungskraftmaschine werden insbesondere sämtliche Kenngrößen verstanden, die den Betriebszustand der Verbrennungskraftmaschine charakterisieren wie Drehzahl, Lastzustand, etc. Neben den aktuellen Werten der angegebenen Größen kann es sich hierbei auch um prognostizierte Werte der Größen handeln, die beispielsweise aufgrund gerade eingetretener Änderungen der Betriebskenngrößen für die Zukunft vorhersagbar sind. Die jeweiligen Größen A, B und C können gemessen und/oder berechnet werden.

Grundsätzlich kann in vorteilhafter Weise darauf zurückgegriffen werden, dass die Geschwindigkeiten des Abgasstromes und der Reaktandenströmung vektorielle Größen darstellen. So kann eine Vektorzerlegung des Vektors der Reaktandengeschwindigkeit in eine Komponente antiparallel zur mittleren Abgasgeschwindigkeit und in eine Komponente senkrecht zur mittleren Abgasgeschwindigkeit erfolgen. Die mittleren Geschwindigkeiten werden bevorzugt über eine räumliche Mittelung erhalten.

Gemäß einer weiteren vorteilhaften Ausgestaltung des erfindungsgemäßen Verfahrens erfolgt die Zugabe der Reaktandenströmung in einem Bereich einer zumindest teilweisen Richtungsänderung des Abgasstroms.

Unter einer zumindest teilweisen Richtungsänderung wird hier beispielsweise eine Richtungsänderung des gesamten Abgasstroms verstanden oder auch ein Abzweig eines Teilstroms beispielsweise durch ein entsprechend ausgebildetes Kupplungs- oder Ventilstück. In solchen Bereichen wie auch in Bereichen einer insgesamt erfolgenden Umlenkung des Abgases bilden sich üblicherweise Turbulenzen, die in vorteilhafter Weise zur Vermischung der Reaktandenströmung mit dem Abgasstrom genutzt werden können, so dass eine möglichst gute Vermischung des Reaktanden mit dem Abgas erfolgt. Weiterhin wird unter einer zumindest teilweisen Richtungsänderung auch eine Richtungsänderung von Teilströmen verstanden, wie sie beispielsweise beim Durchströmen von konischen Bauteilen erfolgen.

Das erfindungsgemäße Verfahren zur Zugabe mindestens eines Reaktanden zu einem Abgasstrom kann in besonders vorteilhafter Weise im Rahmen eines Verfahrens zur selektiven katalytischen Reduktion von Stickoxiden im Abgasstrom einer Verbrennungskraftmaschine eingesetzt werden. Zusätzlich zu den oben angegebenen zumindest durchzuführenden Verfahrensschritten schließt sich hierbei ein Verfahrensschritt an, bei dem nach Zugabe der Reaktandenströmung, also stromabwärts dieser Zugabe, eine selektive katalytische Reduktion von Stickoxiden, beispielsweise auf einem entsprechend ausgebildeten Element, erfolgt. Hierbei umfasst die Reaktandenströmung in vorteilhafter Weise mindestens ein Reduktionsmittel und/oder mindestens ein Reduktionsmittelvorläufer, bevorzugt zumindest Harnstoff in wässriger Lösung.

Gemäß einem weiteren Aspekt der vorliegenden Erfindung wird eine Vorrichtung zur Aufbereitung eines Abgasstroms einer Verbrennungskraftmaschine vorgeschlagen, die eine Strömungsrichtung aufweist. Die Vorrichtung umfasst mindestens ein Element zur Durchführung mindestens einer der folgenden Operationen: a) einer zumindest teilweisen Umsetzung und b) einer zumindest teilweisen Abscheidung zumindest einer Komponente des Abgasstroms. Ferner umfasst die Vorrichtung eine in Strömungsrichtung stromabwärts gelegene Zugabeeinheit zur Zugabe einer Reaktandenströmung in Form einer Tröpfchenströmung in einem Zugabebereich. Erfindungsgemäß ist die Zugabeeinheit so im Gegenstrom zum Abgasstrom ausgerichtet, dass im Betrieb mindestens 80 Gew.-% der Reaktandenströmung auf das Element trifft.

Dies wird insbesondere dadurch erreicht, dass die Zugabeeinheit so ausgerichtet wird, dass der Geschwindigkeitsvektor der austretenden Reaktandenströmung, dessen Richtung im Wesentlichen durch die Ausrichtung der Zugabeeinheit bestimmt wird, auf das Element und insbesondere eine Stirnseite des Elementes weist. Dies bedeutet, dass eine Linie, die in gerader Richtung von der Zugabeeinheit ausgehend in Richtung der austretenden Reaktandenströmung und insbesondere in einer Hauptaustrittsrichtung der Zugabeeinheit auf das Element trifft. Dies führt dazu, dass eine Reaktandenströmung im Gegenstrom in den Abgasstrom eingebracht wird.

Gemäß einer vorteilhaften Ausgestaltung der erfindungsgemäßen Vorrichtung ist die Zugabeeinheit so ausgebildet, dass in Richtung der mittleren Reaktandengeschwindigkeit beim Verlassen der Zugabeeinheit das Element ausgebildet ist.

Insbesondere wird darunter verstanden, dass das Element in Richtung der Strömung aus der Zugabeeinheit ausgebildet ist. Dies gestattet in vorteilhafter Weise auf einfache Art und Weise die Ausbildung einer Vorrichtung, bei der im Betrieb die Reaktandenströmung zumindest teilweise das Element trifft.

Gemäß einer weiteren vorteilhaften Ausgestaltung der erfindungsgemäßen Vorrichtung weist das Element zumindest in Teilbereichen eine poröse Beschichtung auf und/oder ist porös.

Insbesondere kann es sich hier um eine Beschichtung in Form eines Washcoats handeln, der gegebenenfalls katalytisch aktive Zentren umfasst. Insbesondere weist das Element in dem Bereich, in dem im Betrieb zumindest ein Teil der Reaktandenströmung auf das Element trifft, eine poröse Beschichtung auf.

Gemäß einer weiteren vorteilhaften Ausgestaltung der erfindungsgemäßen Vorrichtung erfüllt die Beschichtung zumindest in dem Bereich, in dem im Betrieb zumindest ein Teil der Reaktandenströmung auf das Element trifft, mindestens eine der folgenden Bedingungen:
a) die Beschichtung ist platinfrei;
b) die Beschichtung katalysiert eine Hydrolyse eines Reduktionsmittelvorläufers zu einem Reduktionsmittelpunkt;
c) die Beschichtung ist beständig gegenüber Wasserschlag;
d) die Beschichtung kann eine Flüssigkeit aufnehmen; und
e) die Beschichtung hat eine Porosität von 50% und mehr.

Insbesondere ist die Beschichtung so ausgebildet, dass sie eine Hydrolyse von Harnstoff zu Ammoniak katalysiert. Eine platinfreie Beschichtung verhindert unerwünschte Reaktionen des Reduktionsmittels bzw. des Reduktionsmittelvorläufers, die zu einer unerwünschten Zersetzung des Reduktionsmittelvorläufers ohne Freisetzung des Reduktionsmittels führen würden. Unter einer Beständigkeit gegen Wasserschlag versteht man insbesondere, dass im Betrieb eine Flüssigkeit wie insbesondere Wasser mit einer kleineren Temperatur als die der Beschichtung auf diese auftreffen kann, ohne dass die Beschichtung dadurch beschädigt wird. Insbesondere bedeutet dies, das Tropfen einer Temperatur von 70 bis 90°C auf die Beschichtung bei einer Temperatur von 150 bis 400°C treffen können, ohne dass die Beschichtung geschädigt wird, insbesondere ohne dass Teile der Beschichtung abplatzen. Insbesondere ist die Beschichtung geeignet, Wasser und/oder eine wässrige Lösung, bevorzugt zumindest von Harnstoff, aufzunehmen.
Gemäß einer weiteren vorteilhaften Ausgestaltung der erfindungsgemäßen Vorrichtung sind Umlenkmittel ausgebildet, mittels derer zumindest im Zugabebereich eine zumindest teilweise Umlenkung des Abgasstroms erreichbar ist.

Gemäß einer weiteren vorteilhaften Ausgestaltung der erfindungsgemäßen Vorrichtung ist die Zugabeeinheit mit einem Reservoir für einen Reaktanden verbindbar.

Insbesondere handelt es sich hierbei um einen Tank, welcher mindestens einen Reduktionsmittelvorläufer und/oder ein Reduktionsmittel zur selektiven katalytischen Reduktion von Stickoxiden im Abgas umfasst. Insbesondere handelt es sich hierbei um eine Harnstoffwasserlösung, die gegebenenfalls weitere Stoffe wie beispielsweise Ammoniumformiat enthalten kann. Mittel zum Fördern des Reaktanden oder zum Druckaufbau in einer Leitung können ausgebildet und mit dem Reservoir verbindbar sein.

Gemäß einer weiteren vorteilhaften Ausgestaltung der erfindungsgemäßen Vorrichtung ist die Zugabeeinheit mit Mitteln zum Fördern des Reaktanden verbindbar.

Bei diesen Mitteln zum Fördern des Reaktanden handelt es sich insbesondere um eine Pumpe, mittels der kontinuierlich oder stoßweise eine Förderung einer Reaktandenlösung zur Zugabeeinheit möglich ist. Alternativ oder kumulativ können die Mittel eine Verbindung mit einem Fördermedium, beispielsweise mit Druckluft oder Abgas aufweisen. Bei Vorliegen eines kontinuierlichen Förderprozesses ist in vorteilhafter Weise zwischen den Mitteln zum Fördern und der Zugabeeinheit ein Ventil ausgebildet, mittels welchem die Menge der zuzugebenden Reaktandenströmung dosierbar ist.

Gemäß einer weiteren vorteilhaften Ausgestaltung der erfindungsgemäßen Vorrichtung umfasst die Zugabeeinheit eine Düse.

Bevorzugt handelt es sich hierbei um eine Zerstäuberdüse.

Gemäß einer weiteren vorteilhaften Ausgestaltung welche nicht Teil der Erfindung ist, ist die Zugabeeinheit mit Verdampfungsmitteln zum Verdampfen einer flüssigen Reaktandenlösung verbindbar.

Hierbei kann es sich insbesondere um zusätzliche Heizmittel handeln, die eine zumindest teilweise Verdampfung der Reaktandenlösung bewirken. So kann ein Austreten der Reaktandenströmung, die bevorzugt zumindest teilweise noch flüssige Reaktandenlösung enthält, durch die Expansion bei der Verdampfung bewirkt werden.

Weiterhin ist es vorteilhaft, dass die Vorrichtung zur Aufbereitung eines Abgasstroms ein weiteres stromabwärts der Zugabeeinheit ausgebildetes Element umfasst, welches eine Beschichtung zur Katalysierung der selektiven katalytischen Reduktion umfasst. Eine solche Vorrichtung kann auch als Vorrichtung zur selektiven katalytischen Reduktion von Stickoxiden im Abgasstrom einer Verbrennungskraftmaschine benannt werden.

Sämtliche für das Verfahren offenbarten Details und Vorteile lassen sich in gleicher Weise auf die erfindungsgemäße Vorrichtung übertragen und anwenden. Sämtliche für die erfindungsgemäße Vorrichtung offenbarten Details und Vorteile lassen sich auf das erfindungsgemäße Verfahren übertragen und anwenden. Die erfindungsgemäße Vorrichtung kann in bevorzugter Weise zur Durchführung des erfindungsgemäßen Verfahrens dienen.

Die Erfindung wird weiterhin anhand der beigefügten Figuren näher erläutert, ohne dass die Erfindung auf die dort gezeigten Ausführungsbeispiele und Details beschränkt wäre. Es zeigen schematisch:
- Fig. 1:: ein erstes Ausführungsbeispiel einer erfindungsgemäßen Vorrichtung; im Schnitt;
- Fig. 2:: ein zweites Ausführungsbeispiel einer erfindungsgemäßen Vorrichtung im Schnitt;
- Fig. 3:: ein drittes Ausführungsbeispiel einer erfindungsgemäßen Vorrichtung im Schnitt;
- Fig. 4:: ein viertes Ausführungsbeispiel einer erfindungsgemäßen Vorrichtung im Schnitt; und
- Fig. 5:: ein fünftes Ausführungsbeispiel einer erfindungsgemäßen Vorrichtung im Schnitt.

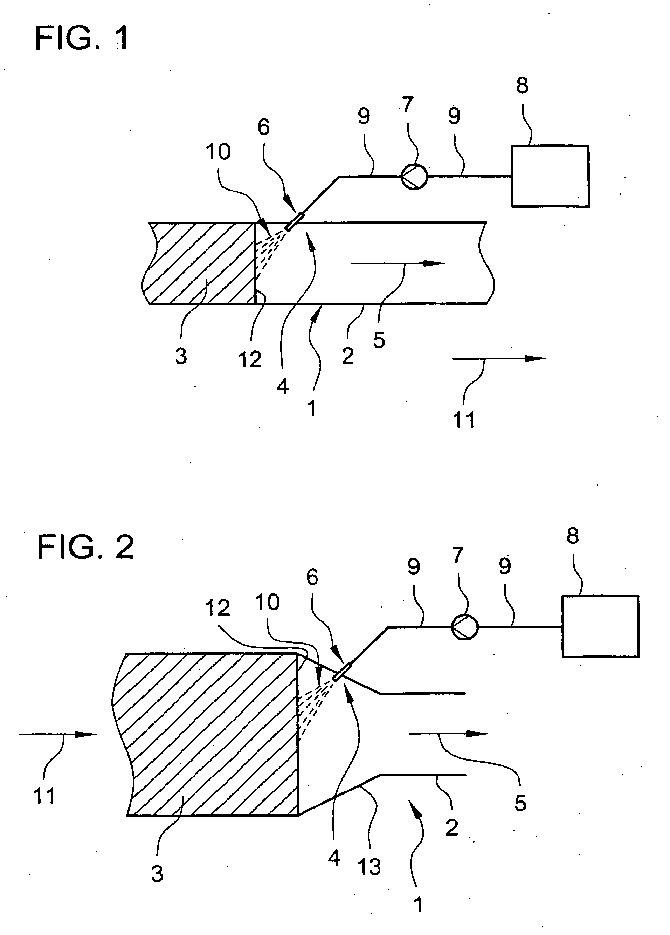

Fig. 1 zeigt schematisch ein erstes Ausführungsbeispiel einer erfindungsgemäßen Vorrichtung 1 zur Aufbereitung eines Abgasstroms 5 einer nicht gezeigten Verbrennungskraftmaschine. Die Vorrichtung 1 wird im Betrieb in einer Strömungsrichtung 11 vom Abgasstrom 5 durchströmt. Die Vorrichtung 1 ist Teil einer Abgasleitung 2, kann mit einer Abgasleitung 2 verbunden sein oder kann in einer solchen Abgasleitung 2 ausgebildet sein. Die Vorrichtung 1 umfasst ein Element 3 zur Durchführung mindestens einer der folgenden Operationen: a) einer zumindest teilweisen Umsetzung und b) einer zumindest teilweisen Abscheidung zumindest einer Komponente des Abgasstroms 5. Insbesondere handelt es sich bei dem Element 3 um einen Partikelfilter und/oder Katalysatorträgerkörper, beispielsweise jeweils in Form eines Wabenkörpers. In Strömungsrichtung 11 stromabwärts des Elementes 3 ist eine Zugabeeinheit 4 zur Zugabe einer Reaktandenströmung 10 zum Abgasstrom 5 ausgebildet. Die Zugabeeinheit 4 umfasst eine Düse 6, durch die die Reaktandenströmung 10 in Form einer Tröpfchenströmung in den Abgasstrom 5 abgegeben werden kann. Hierbei ist die Zugabeeinheit so ausgebildet, dass im Betrieb die Reaktandenströmung 10 zumindest teilweise auf das Element 3 und insbesondere auf eine Stirnfläche 12 des Elementes 3 trifft. Zumindest in diesem Bereich weist das Element 3 eine poröse Beschichtung auf oder ist porös ausgebildet. Bevorzugt ist diese Beschichtung zumindest in den letzten 10% der Länge des Elementes 3 ausgebildet.

Die Düse 6 ist über ein Mittel 7 zum Fördern des mindestens einen Reaktanden mit einem Reservoir 8 für einen Reaktanden verbindbar. Reservoir 8, Mittel 7 zum Fördern und Düse 6 sind durch entsprechend ausgebildete Leitungen 9 miteinander verbunden. Als Reaktand wird insbesondere Harnstoff in einer wässrigen Lösung zugegeben.

Fig. 2 zeigt schematisch ein zweites Ausführungsbeispiel einer erfindungsgemäßen Vorrichtung 1. Gleiche Teile sind in allen Figuren mit gleichen Bezugszeichen versehen. Im Unterschied zum ersten Ausführungsbeispiel weist hier die Abgasleitung 2 einen konusförmigen Abschnitt 13 auf, der sich an das Element 3 anschließt. Die Zugabeeinheit 4 mit der Düse 6 ist hier im konusförmigen Abstand 13 ausgebildet.

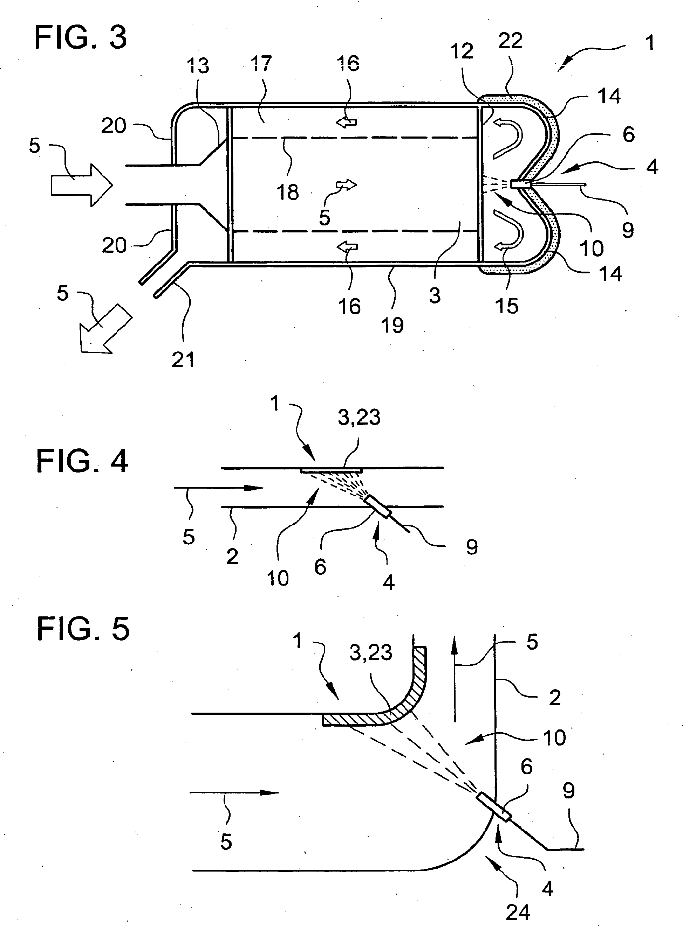

Fig. 3 zeigt schematisch ein drittes Ausführungsbeispiel einer erfindungsgemäßen Vorrichtung 1. Hierbei strömt der Abgasstrom 5 in ein Element 3. Nach Verlassen des Elementes 3 strömt der Abgasstrom 5 in einen Umkehrbereich 14, in dem eine Umkehr 15 des Abgasstroms 5 erfolgt. Der Abgasstrom 5 strömt dann in Form einer Rückströmung 16 durch einen im Wesentlichen ringzylindrischen Bereich 17. Dieser ringzylindrische Bereich 17 kann ebenfalls ein Element zur Umsetzung und/oder Abscheidung zumindest einer Komponente des Abgasstroms sein, jedoch kann es sich auch hier um einen im Wesentlichen frei durchströmbaren Bereich handeln. Der Bereich 17 und das Element 3 sind durch eine Trennwand 18 voneinander getrennt. Die Trennwand 18 kann einerseits als eine Art Mantelrohr ausgebildet sein, wenn der Bereich 17 einen im Wesentlichen frei durchströmbaren Bereich 17 darstellt, es kann sich jedoch auch um einen Bereich im Inneren eines einzigen Wabenkörpers handeln, der zum einen als Element 3 und zum anderen als Bereich 17 fungiert. Hierbei kann die Trennwand 18 durch die Ausbildung einer entsprechenden Labyrinthdichtung im Ansatz des konusförmigen Abschnitts 13 an den entsprechenden Wabenkörper ausgebildet sein. Die Vorrichtung 1 wird bei diesem Ausführungsbeispiel durch ein äußeres Mantelrohr 19 begrenzt. Die Rückströmung 16 des Abgasstroms 5 wird in einem Abführbereich 20 gesammelt und über eine Abführleitung 21 abgeführt. Im Umkehrbereich 14 ist die Zugabeeinheit 4 mit der Düse 6 so ausgebildet, dass diese die Reaktandenströmung 10 zumindest teilweise auf die Stirnseite 12 des Elementes 3 gibt. Auch hier ist die Zugabeeinheit 4 über entsprechenden Leitungen 9 mit nicht gezeigten Mitteln 7 zum Fördern und/oder einem Reservoir 8 verbindbar. Der Umkehrbereich 14 ist mit einer thermischen Isolierung 22 versehen. Diese verhindert vorteilhafterweise ein Abkühlen des Abgasstroms 5 im Bereich der Umkehrströmung 15.

Fig. 4 zeigt ein viertes Ausführungsbeispiel einer erfindungsgemäßen Vorrichtung1. Hierbei ist das Element 3 in Form einer Beschichtung 23 auf der Wand einer Abgasleitung 2 ausgebildet. Der Abgasstrom 5 durchströmt die Abgasleitung 2. Durch ein stromabwärts des Elementes 3 ausgebildete Zugabeeinheit 4, die eine Düse 6 umfasst, kann eine Reaktandenströmung im Betrieb zumindest teilweise auf das Element 3 gesprüht werden. Die Zugabeeinheit 4 kann über Leitungen 9 mit entsprechenden Fördermitteln und Reservoiren 8 für Reaktandenlösung wie beispielsweise Harnstoff-Wasserlösung verbunden werden.

Fig. 5 zeigt ein fünftes Ausführungsbeispiel einer erfindungsgemäßen Vorrichtung 1. Hierbei weist die Abgasleitung 2 einen Umlenkbereich 24 auf, in dem die Richtung des Abgasstroms geändert wird. Gleichzeitig verengt sich im Umlenkbereich 24 die Abgasleitung 2. Auch hier ist das Element 3 in Form einer katalytisch-aktiven Beschichtung 23 ausgebildet. Bevorzugt handelt es sich hierbei um eine poröse Beschichtung, die beispielsweise Washcoat umfasst. Besonders vorteilhaft ist hierbei eine Ausbildung, bei der die Beschichtung 23 platinfreie Katalysatoren enthält und/oder eine Hydrolyse die beispielsweise von Harnstoff zu Ammoniak katalysiert. Die Zugabeeinheit 4 umfasst auch hier eine Düse 6, die über entsprechende Leitungen 9 ggf. über Fördermittel mit einem entsprechenden Reservoir 8 einer Reaktandenlösung verbindbar ist.

Das erfindungsgemäße Verfahren und die erfindungsgemäße Vorrichtung 1 erlauben in vorteilhafter Weise die Zugabe eines Reaktanden, insbesondere eines flüssigen Reaktanden, in Form einer Reaktandenströmung 10 in einen Abgasstrom 5, so dass zumindest ein Teil der Reaktandenströmung 10 auf ein Element 3 zur zumindest teilweisen Umsetzung und/oder teilweisen Abscheidung zumindest einer Komponente des Abgasstroms 5 trifft. Hierdurch wird in vorteilhafter Weise eine schnelle Verdampfung der Reaktandenströmung 10 erreicht. Durch Auftreffen auf das Element 3, welches im Betrieb heiß ist, also beispielsweise Temperaturen von 400°C und mehr aufweist, erfolgt eine schnelle Verdampfung und - aufgrund der bevorzugt ausgeführten porösen Beschichtung 23 des Elementes 3 - eine Aufnahme der Reaktandenlösung in das Element mit sukzessiver Verdampfung. So kann insbesondere Harnstoff schnell, effektiv und praktisch vollständig beim Einbringen in ein Abgassystem einer Verbrennungskraftmaschine verdampft werden und als Reduktionsmittel für die selektive katalytische Reduktion von Stickoxiden insbesondere in einem stromabwärts ausgebildeten SCR-Katalysator dienen.

### Bezugszeichenliste

- 1: Vorrichtung zur Zugabe mindestens eines Reaktanden zu einem Abgasstrom
- 2: Abgasleitung
- 3: Element zur zumindest teilweisen Umsetzung und/oder teilweisen Abscheidung zumindest einer Komponente des Abgasstroms
- 4: Zugabeeinheit
- 5: Abgasstrom
- 6: Düse
- 7: Mittel zum Fördern
- 8: Reservoire
- 9: Leitung
- 10: Reaktandenströmung
- 11: Strömungsrichtung
- 12: Stirnfläche
- 13: konusförmiger Abschnitt
- 14: Umkehrbereich
- 15: Umkehrströmung
- 16: Rückströmung
- 17: Bereich
- 18: Trennwand
- 19: äußeres Mantelrohr
- 20: Abführbereich
- 21: Abführleitung
- 22: Isolierung
- 23: Beschichtung
- 24: Umlenkbereich

## Patentansprüche

1. Verfahren zur Zugabe mindestens eines Reaktanden zu einem Abgasstrom (5) einer Verbrennungskraftmaschine, wobei stromabwärts eines Elements (3) zur Durchführung mindestens einer der folgenden Operationen: a) einer zumindest teilweisen Umsetzung und b) einer zumindest teilweisen Abscheidung zumindest einer Komponente des Abgasstroms (5) eine Reaktandenströmung (10) in Form einer Tröpfchenströmung so im Gegenstrom zum Abgasstrom (5) zugegeben wird, dass
mindestens 80 Gew.-% der Reaktandenströmung (10) auf das Element (3) trifft, wobei die Reaktandenströmung (10) von dem Element (3) aufgenommen und verdampft wird.

2. Verfahren nach Anspruch 1, bei dem die Reaktandenströmung (10) in einem Element (3), aufweisend zumindest in Teilbereichen eine poröse Beschichtung (23), und/oder in einem porösen Element (3) zunächst aufgenommen und zwischengespeichert wird, und dann verdampft und abgegeben wird.

3. Verfahren nach Anspruch 1 oder 2, bei dem die Reaktandenströmung (10) Tropfen eines mittleren Durchmessers von mindestens 30 Mikrometern umfasst.

4. Verfahren nach einem der vorhergehenden Ansprüche, bei dem zumindest in dem Bereich, in dem die Reaktandenströmung (10) auf das Element (3) trifft, eine Zersetzungsreaktion mindestens einer Komponente der Reaktandenströmung (10) erfolgt.

5. Verfahren nach einem der vorhergehenden Ansprüche, bei dem die Reaktandenströmung (10) mindestens einen der folgenden Stoffe umfasst:
a) ein Reduktionsmittel und
b) einen Reduktionsmittelvorläufer.

6. Verfahren nach einem der vorhergehenden Ansprüche, bei dem mindestens eine der folgenden Größen:
a) eine mittlere Geschwindigkeit der Reaktandenströmung (10);
b) ein mittlerer Massenstrom der Reaktandenströmung (10); und
c) die Zusammensetzung der Reaktandenströmung (10) in Abhängigkeit von mindestens einer der folgenden Größen einstellbar sind:
A) der Zusammensetzung des Abgasstroms (5);
B) einer mittleren Geschwindigkeit des Abgasstroms (5); und
C) von Betriebskenngrößen der Verbrennungskraftmaschine.

7. Verfahren nach einem der vorhergehenden Ansprüche, bei dem die Zugabe der Reaktandenströmung (10) in einem Bereich einer zumindest teilweisen Richtungsänderung des Abgasstroms (5) erfolgt.

8. Vorrichtung (1) zur Aufbereitung eines Abgasstroms (5) einer Verbrennungskraftmaschine, die eine Strömungsrichtung (11) aufweist, mit mindestens einem Element (3) zur Durchführung mindestens einer der folgenden Operationen: a) einer zumindest teilweisen Umsetzung und b) einer zumindest teilweisen Abscheidung zumindest einer Komponente des Abgasstroms (5) und einer in Strömungsrichtung (11) stromabwärts gelegenen Zugabeeinheit (4) zur Zugabe einer Reaktandenströmung (10) in Form einer Tröpfchenströmung in einen Zugabebereich, **dadurch gekennzeichnet, dass** die Zugabeeinheit (4) so im Gegenstrom zum Abgasstrom (5) ausgerichtet ist, dass im Betrieb mindestens 80 Gew.-% der Reaktandenströmung (10) auf das Element (3) trifft.

9. Vorrichtung nach Anspruch 8, bei der die Zugabeeinheit (4) so ausgebildet ist, dass in Richtung der mittleren Reaktandengeschwindigkeit beim Verlassen der Zugabeeinheit das Element (3) ausgebildet ist.

10. Vorrichtung nach Anspruch 8 oder 9, bei der das Element (3) zumindest in Teilbereichen eine poröse Beschichtung (23) aufweist und/oder porös ist

11. Vorrichtung nach Anspruch 10, bei der die Beschichtung (23) zumindest in dem Bereich, in dem im Betrieb zumindest ein Teil der Reaktandenströmung (10) auf das Element (3) trifft, mindestens eine der folgenden Bedingungen erfüllt:
a) die Beschichtung (23) ist platinfrei;
b) die Beschichtung (23) katalysiert eine Hydrolyse eines Reduktionsmittelvorläufers zu einem Reduktionsmittel.
c) die Beschichtung ist beständig gegenüber Wasserschlag;
d) die Beschichtung kann eine Flüssigkeit aufnehmen; und
e) die Beschichtung hat eine Porosität von 50% und mehr.

12. Vorrichtung nach einem der Ansprüche 8 bis 11, bei der Umlenkmittel (14, 24) ausgebildet sind, mittels derer zumindest im Zugabebereich eine zumindest teilweise Umlenkung des Abgasstroms (5) erreichbar ist.

13. Vorrichtung (1) nach einem der Ansprüche 8 bis 12, bei der die Zugabeeinheit (4) eine Düse (6) umfasst.

## Claims

1. A method for adding at least one reactant to an exhaust gas stream (5) of an internal combustion engine, wherein, downstream of an element (3) for carrying out at least one of the following operations: a) an at least partial conversion and b) an at least partial deposition of at least one component of the exhaust gas stream (5), a reactant flow (10) in a form of a flow of droplets is added in countercurrent to the exhaust gas stream (5) in such a way that at least 80 wt.-% of the reactant flow (10) impinges on the element (3), wherein the reactant flow (10) is taken up by the element (3) and evaporated.

2. The method as claimed in claim 1, in which the reactant flow is taken up and temporarily stored by a porous element (3) and/or an element (3) which comprises at least in partial regions a porous coating (23), and subsequently evaporated and passed on.

3. The method as claimed in claim 1 or 2, in which the reactant flow (10) comprises droplets of a mean diameter of at least 30 micrometers.

4. The method as claimed in one of the preceding claims, in which at least in the region in which the reactant flow (10) impinges on the element (3) a decomposition reaction of at least one component of the reactant flow (10) occurs.

5. The method as claimed in one of the preceding claims, in which the reactant flow (10) comprises at least one of the following substances:
a) a reducing agent and
b) a reducing agent precursor.

6. The method as claimed in one of the preceding claims, in which at least one of the following variables:
a) an average velocity of the reactant flow (10);
b) an average mass flow rate of the reactant flow (10); and
c) the composition of the reactant flow (10) can be set in dependence on at least one of the following variables:
A) the composition of the exhaust gas stream (5);
B) an average velocity of the exhaust gas stream (5); and
C) characteristic operating variables of the internal combustion engine.

7. The method as claimed in one of the preceding claims, in which the adding of the reactant flow (10) takes place in a region of an at least partial change in the direction of the exhaust gas stream (5).

8. A device (1) for treating an exhaust gas stream (5) of an internal combustion engine that has a direction of flow (11), with at least one element (3) for carrying out at least one of the following operations: a) an at least partial conversion and b) an at least partial deposition of at least one component of the exhaust gas stream (5), and an adding unit (4), situated downstream in the direction of flow (11), for adding a reactant flow (10) in form of a flow of droplets in an adding region, **characterized in that** the adding unit (4) is aligned in such a way in countercurrent to the exhaust gas stream (5) that at least 80 wt.-% of the reactant flow (10) impinges on the element (3) during operation.

9. The device as claimed in claim 8, in which the adding unit (4) is formed in such a way that the element (3) is formed in the direction of the average reactant velocity when it leaves the adding unit.

10. The device as claimed in claim 8 or 9, in which the element (3) has a porous coating (23) and/or is porous, at least in partial regions.

11. The device as claimed in claim 10, in which the coating (23) at least in the region in which part of the reactant flow (10) impinges on the element (3) during operation meets at least one of the following conditions:
a) the coating (23) is platinum-free;
b) the coating (23) acts as a catalyst for a hydrolysis of a reducing agent precursor to form a reducing agent;
c) the coating is resistant to water impact;
d) the coating can take up a liquid; and
e) the coating has a porosity of 50% and more.

12. The device as claimed in one of claims 8 to 11, in which deflecting means (14, 24) are formed, by means of which an at least partial deflection of the exhaust gas stream (5) can be achieved, at least in the adding region.

13. The device (1) as claimed in one of claims 8 to 12, in which the adding unit (4) comprises a nozzle (6).

## Revendications

1. Procédé destiné à l'ajout d'au moins un réactif à un flux de gaz d'échappement (5) d'une machine à combustion interne, dans quel cas pour la mise en oeuvre d'au moins une des opérations suivantes : a) une transformation au moins partielle et b) une déposition au moins partielle d'au moins un composant du flux de gaz d'échappement (5), on ajoute en aval d'un élément (3), un écoulement du réactif (10) en forme d'un écoulement de gouttelettes de telle façon en contre-courant au flux de gaz d'échappement (5) qu'au moins 80 % en poids de l'écoulement du réactif rencontrent l'élément (3), l'écoulement du réactif (10) étant absorbé par l'élément (3) et évaporé.

2. Procédé selon la revendication 1, dans le cas duquel l'écoulement du réactif (10) dans un élément (3) comportant au moins dans des régions partielles un revêtement poreux (23), et/ou étant d'abord absorbé dans un élément poreux (3) et entreposé et ensuite évaporé et libéré.

3. Procédé selon la revendication 1 ou 2, dans le cas duquel l'écoulement du réactif (10) comprend des gouttes d'un diamètre moyen d'au moins 30 micromètres.

4. Procédé selon l'une des revendications précédentes, dans le cas duquel au moins dans la région, dans laquelle l'écoulement du réactif (10) rencontre l'élément (3), une réaction de décomposition d'au moins un composant de l'écoulement du réactif (10) est effectuée.

5. Procédé selon l'une des revendications précédentes, dans le cas duquel l'écoulement du réactif (10) comprend au moins une des matières suivantes:
a) un agent de réduction;
b) un précurseur d'agent de réduction.

6. Procédé selon l'une des revendications précédentes, dans le cas duquel au moins une des données suivantes:
a) une vitesse moyenne de l'écoulement du réactif (10);
b) un flux de masse moyen de l'écoulement du réactif (10); et
c) la composition de l'écoulement du réactif (10) peut être ajustée en fonction des données suivantes:
A) de la composition du flux de gaz d'échappement (5);
B) d'une vitesse moyenne du flux de gaz d'échappement (5)
C) des paramètres d'opération de la machine à combustion interne.

7. Procédé selon l'une des revendications précédentes, dans le cas duquel l'ajout de l'écoulement du réactif (10) est effectué dans une région de changement de direction au moins partiel du flux de gaz d'échappement.

8. Dispositif (1) destiné à la préparation d'un flux de gaz d'échappement (5) d'une machine à combustion interne, qui a une direction d'écoulement (11) avec au moins un élément (3) pour la mise en oeuvre d'au moins une des opérations suivantes : a) une transformation au moins partielle et b) une déposition au moins partielle d'au moins un composant du flux de gaz d'échappement (5), et une unité d'ajout se trouvant en aval de la direction d'écoulement (11) pour ajouter un écoulement de réactif (10) en forme d'un écoulement de gouttelettes dans une région d'ajout, **caractérisé en ce que** l'unité d'ajout (4) est dirigée de telle façon en contre-courant vers le flux de gaz d'échappement (5) que durant l'opération au moins 80 % en poids de l'écoulement du réactif (10) rencontrent l'élément (3).

9. Dispositif selon la revendication 8, dans le cas duquel l'unité d'ajout (4) est réalisée de telle manière qu'en direction de la vitesse moyenne du réactif, en quittant l'unité d'ajout, l'élément (3) est forme.

10. Dispositif selon la revendication 8 ou 9, dans le cas duquel l'élément (3) présente au moins dans des régions partielles un revêtement poreux (23) et/ou est poreux.

11. Dispositif selon la revendication 10, dans le cas duquel le revêtement (23), au moins dans la région, où durant l'opération au moins une partie de l'écoulement du réactif (10) rencontre l'élément (3), satisfait au moins à une des conditions suivantes:
a) le revêtement (23) est exempt de platine;
b) le revêtement (23) catalyse une hydrolyse d'un précurseur d'agent de réduction pour obtenir un agent de réduction;
c) le revêtement est résistant contre le coup de bélier;
d) le revêtement peut absorber un liquide; et
e) le revêtement a une porosité de 50 % et plus.

12. Dispositif selon l'une des revendications 8 à 11, dans le cas duquel des moyens de changement de direction (14, 24) sont formés, au moyen desquels, au moins dans la région d'ajout, on peut atteindre, un changement de direction au moins partiel du flux de gaz d'échappement (5).

13. Dispositif (1) selon l'une des revendications 8 à 12, dans le cas duQuel l'unité d'ajout (4) comprend une buse (6).
